# EUROPÄISCHE PATENTSCHRIFT

(11) **EP 1 185 367 B1**
(45) Veröffentlichungstag und Bekanntmachung des Hinweises auf die Patenterteilung: **29.06.2005**
(21) Anmeldenummer: 00935078.6
(22) Anmeldetag: 19.05.2000
(51) Int. Cl.: B01J 27/26, C08G 65/10

(54) **VERFAHREN ZUR HERSTELLUNG VON POLYETHERPOLYOLE UNTER VERWENDUNG VON KRISTALLINEN MULTIMETALLCYANID-KATALYSATOREN**
PROCESS FOR THE PREPARATION OF POLYETHER POLYOLS USING CRYSTALLINE MULTI-METAL CYANIDE CATALYSTS
PROCEDE DE PREPARATION DE POLYETHER POLYOLS EN PRESENCE DE CATALYSEURS A BASE DE CYANURE POLYMETALLIQUE CRISTALLIN

(30) Priorität: 02.06.1999 US 323810
(43) Veröffentlichungstag der Anmeldung: 13.03.2002
(73) Patentinhaber: BASF AKTIENGESELLSCHAFT, 67056 Ludwigshafen (DE)
(72) Erfinder: GROSCH, Georg, Heinrich, D-67098 Bad Dürkheim (DE); HARRE, Kathrin, D-01109 Dresden (DE); ERBES, Jörg, D-76137 Karlsruhe (DE); LORENZ, Reinhard, D-48366 Laer (DE); BAUER, Stephan, D-49179 Ostercappeln (DE); OSTROWSKI, Thomas, D-44581 Castrop-Rauxel (DE); BAUM, Eva, D-01987 Schwarzheide (DE); JUNGE, Dieter, D-67227 Frankenthal (DE)
(86) Internationale Anmeldenummer: PCT/EP2000/004572
(87) Internationale Veröffentlichungsnummer: WO 2000/074844

(56) Entgegenhaltungen:
- EP-A- 0 755 716
- EP-A- 0 862 947
- DE-A- 19 742 978
- US-A- 3 427 334

## Beschreibung

Die Erfindung betrifft ein Verfahren zur Herstellung von Polyetheralkoholen unter Verwendung von hochaktiven Multimetallcyanidverbindungen.

Polyetheralkohole werden in großen Mengen zur Herstellung von Polyurethanen eingesetzt. Ihre Herstellung erfolgt zumeist durch katalytische Anlagerung von niederen Alkylenoxiden, insbesondere Ethylenoxid und Propylenoxid, an H-funktionelle Startsubstanzen. Als Katalysatoren werden zumeist basische Metallhydroxide oder Salze verwendet, wobei das Kaliumhydroxid die größte praktische Bedeutung hat.

Bei der Synthese von Polyetheralkoholen mit langen Ketten, wie sie besonders zur Herstellung von Polyurethan-Weichschäumen eingesetzt werden, kommt es bei fortschreitendem Kettenwachstum zu Nebenreaktionen, die zu Störungen im Kettenaufbau führen. Diese Nebenprodukte werden als ungesättigte Bestandteile bezeichnet und führen zu einer Beeinträchtigung der Eigenschaften der resultierenden Polyurethane. Es hat daher in der Vergangenheit nicht an Versuchen gefehlt, Polyetheralkohole mit einem niedrigen Gehalt an ungesättigten Bestandteilen bereitzustellen. Hierzu werden insbesondere die eingesetzten Alkoxylierungskatalysatoren gezielt verändert. So wird in EP-A-268 922 vorgeschlagen, Cäsiumhydroxid als Katalysator für die Herstellung von Polyetheralkoholen einzusetzen. Damit kann zwar der Gehalt an ungesättigten Anteilen gesenkt werden, Cäsiumhydroxid ist jedoch teuer und problematisch zu entsorgen.

Weiterhin ist die Verwendung von Multimetallcyanidkomplex-Verbindungen, zumeist Zinkhexacyanometallaten, zur Herstellung von Polyetheralkoholen mit niedrigen Gehalten an ungesättigten Bestandteilen bekannt. Es gibt eine große Zahl von Dokumenten, in denen die Herstellung von Polyetheralkoholen unter Verwendung von Multimetallcyanidverbindungen als Katalysator beschrieben wird, beispielsweise in DD-A-203 735 und DD-A-203 734 die Herstellung von Polyetherolen unter Verwendung von Zinkhexacyanocobaltat.

Auch die Herstellung der Zinkhexacyanometallate ist bekannt. Üblicherweise erfolgt die Herstellung dieser Katalysatoren, indem Lösungen von Metallsalzen, wie Zinkchlorid, mit Lösungen von Alkali- oder Erdalkalimetallcyanometallaten, wie Kaliumhexacyanocobaltat, umgesetzt werden. Zur entstehenden Fällungssuspension wird in der Regel sofort nach dem Fällungsvorgang eine wassermischbare, Heteroatome enthaltende Komponente als Ligand zugegeben. Diese Komponente kann auch bereits in einer oder in beiden Eduktlösungen vorhanden sein. Diese wassermischbare, Heteroatome enthaltende Komponente kann beispielsweise ein Ether, Polyether, Alkohol, Keton oder eine Mischung davon sein. Derartige Verfahren sind beispielsweise in US 3,278,457, US 3,278,458, US 3,278,459, US 3,427,256, US 3,427,334, US 3,404,109, US 3,829,505, US 3,941,849, EP 283,148, EP 385,619, EP 654,302, EP 659,798, EP 665,254, EP 743,093, EP 755,716, US 4,843,054, US 4,877,906, US 5,158,922, US 5,426,081, US 5,470,813, US 5,482,908, US 5,498,583, US 5,523,386, US 5,525,565, US 5,545,601, JP 7,308,583, JP 6,248,068, JP 4,351,632 und US-A-5,545,601 beschrieben.

Die in US 3,427,334 und 3,278,459 beschriebenen Doppelmetallcyanide weisen ein kubisches Kristallsystem auf. Gemäß der Lehre dieser Patente sind derartige Verbindungen ohne Liganden als Katalysatoren für die Anlagerung von Alkylenoxiden inaktiv.

In DD-A-148 957 wird die Herstellung von Zinkhexacyanoiridat und dessen Verwendung als Katalysator bei der Polyetheralkoholherstellung beschrieben. Dabei wird als ein Ausgangsstoff Hexacyanoiridiumsäure verwendet. Diese Säure wird als Feststoff isoliert und in dieser Form eingesetzt.

In EP 862,947 wird die Herstellung von Doppelmetallcyanidkomplexen beschrieben, wobei Hexacyanocobaltsäure bzw. deren wäßrige Lösungen als Edukt verwendet werden. Die gemäß der Lehre von EP 862,947 erzeugten Doppelmetallcyanide weisen eine hohe Reaktivität für die ringöffnende Polymerisation von Alkylenoxiden auf.

Multimetallcyanidkatalysatoren weisen zwar hohe Polymerisationsraten auf, jedoch hat es nicht an Versuchen gefehlt, die katalytische Aktivität der Multimetallcyanidverbindungen weiter zu steigern. Ein Schwerpunkt der Arbeiten auf diesem Gebiet konzentriert sich dabei auf Multimetallcyanidverbindungen, die amorph sind. Die Herstellung solcher Multimetallcyanidverbindungen ist unter anderem in EP 654,302 offenbart. Es konnte aber gezeigt werden, daß sich die Aktivität dieser Katalysatoren durch die Inkorporierung von Polymeren weiter steigern läßt. So beschreibt EP 700,949 Doppelmetallcyanidkomplexe mit gesteigerter Reaktivität, die zwischen 5 und 80 Gewichtsprozent bezogen auf den Katalysator an Polyethern, mit einer Molmasse größer 500 Dalton enthalten. In WO 97/40,086 werden Doppelmetallcyanid-Katalysatoren mit gesteigerter Reaktivität beschrieben, die zwischen 5 und 80 Gew.-% an Polyethern mit Molmassen kleiner 500 Dalton enthalten. WO 98/16310 beschreibt Doppelmetallcyanide, die zwischen 2 und 80 Gew.-% an funktionalisierten Polymeren, wobei Polyether ausdrücklich ausgenommen sind, enthalten. Alle in den genannten Dokumenten beschriebenen Katalysatoren sind amorph. In allen drei Dokumenten wird dargelegt, daß ohne die Mitverwendung von Liganden keine Katalysatoren mit ausreichender Aktivität erhalten werden können.

Kristalline Multimetallcyanidverbindungen spielen im Stand der Technik eine wesentlich geringere Rolle. Neben der erwähnten EP 862,947 sind in EP 755,716 aktive kristalline Multimetallcyanidverbindungen beschrieben, die weniger als 0,2 Mol Metallsalz bezogen auf das Mol Multimetallcyanid besitzen.

Allen im Stand der Technik beschriebenen Multimetallcyanidverbindungen ist gemein, daß sie in Gegenwart eines organischen, Heteroatome enthaltenden Stoffes, welcher in der Literatur als organischer Ligand oder organischer Komplexbildner bezeichnet wird, hergestellt oder nachträglich mit diesem behandelt wurden. Ohne diesen organischen Komplexbildner ist gemäß dem bekannten Stand der Technik die katalytische Aktivität der Multimetallcyanidverbindung nicht ausreichend.

Aufgabe der Erfindung war es, ein Verfahren zur Herstellung von Polyetheralkoholen durch ringöffnende Polymerisation von Alkylenoxiden zu entwickeln, bei dem als Katalysatoren auf einfache Weise hergestellte Multimetallcyanidverbindungen mit hoher katalytischer Aktivität eingesetzt werden.

Überraschenderweise wurde nun gefunden, daß die Aufgabe gelöst werden konnte, indem katalytisch aktive Multimetallcyanidverbindungen eingesetzt werden, bei deren Herstellung, auf den Einsatz von Liganden verzichtet wird.

Gegenstand der Erfindung ist ein Verfahren zur Herstellung von Polyetheralkoholen unter Verwendung von Multimetallcyanidverbindungen der allgemeinen Formel (I)

M¹ ₐ[M²(CN)_{b}A_{c}]_{d} * e M¹ _{f}X_{g} * h H₂O (I),

wobei
- M¹: mindestens ein Metallion, ausgewählt aus der Gruppe, enthaltend Zn²⁺, Fe²⁺, Co³⁺, Ni²⁺, Mn²⁺, Co²⁺, Sn²⁺, Pb²⁺, Fe³⁺, Mo⁴⁺, Mo⁶⁺, Al³⁺, V⁵⁺, Sr²⁺, W⁴⁺, W⁶⁺, Cu²⁺, Cr²⁺, Cr³⁺, Cd²⁺, Hg²⁺, Pd²⁺, Pt²⁺, V²⁺, Mg²⁺, Ca²⁺, Ba²⁺ und Mischungen daraus,
- M²: mindestens ein Metallion, ausgewählt aus der Gruppe, enthaltend Fe²⁺, Fe³⁺, Co³⁺, Cr³⁺, Mn²⁺, Mn³⁺, Rh³⁺, Ru²⁺, Ru³⁺, V⁴⁺, V⁵⁺, Co²⁺, Ir³⁺ und Cr²⁺ bedeutet und M² verschieden von M¹ ist,
- X: mindestens ein Anion, ausgewählt aus der Gruppe, enthaltend Halogenid, Hydroxid, Sulfat, Carbonat, Cyanid, Thiocyanat, Isocyanat, Carboxylat, insbesondere Formiat, Acetat, Propionat, Oxalat, Nitrat,
- A: mindestens ein Anion, ausgewählt aus der Gruppe, enthaltend Halogenid, Hydroxid, Sulfat, Carbonat, Cyanat, Thiocyanat, Isocyanat, Carboxylat oder Nitrat, insbesondere Cyanid bedeutet, wobei A gleich oder verschieden X sein kann, bedeuten
- und a, b, c und d: ganze oder gebrochene Zahlen sind, die so ausgewählt sind, daß die Elektroneutralität der Cyanidverbindung gewährleistet ist, wobei a, b und d größer null und c größer oder gleich null ist,
- f und g: ganze oder gebrochene Zahlen sind, die so ausgewählt sind, daß die Elektroneutralität von M¹_{f}X_{g} gewährleistet ist,
- e: eine ganze oder gebrochene Zahl größer null ist, sowie
- h: eine ganze oder gebrochene Zahl größer oder gleich null ist, die unter Verwendung einer Hexacyanokoblatsäure hergestellt werden.

Die Herstellung der Multimetallcyanidverbindungen der allgemeinen Formel (I)

M¹ ₐ[M²(CN)_{b}A_{c}]_{d} * e M¹ _{f}X_{g} * h H₂O (I),

umfasst die Schritte
a) Hinzufügen einer wäßrigen Lösung eines wasserlöslichen Metallsalzes der allgemeinen Formel M¹ₘ(X)ₙ, wobei M¹ mindestens ein Metallion, ausgewählt aus der Gruppe, enthaltend Zn²⁺, Fe²⁺, Co³⁺, Ni²⁺, Mn²⁺, Co²⁺, Sn²⁺, Pb²⁺, Fe³⁺, Mo⁴⁺, Mo⁶⁺, Al³⁺, V⁵⁺, Sr²⁺, W⁴⁺, W⁶⁺, Cu²⁺, Cr²⁺, Cr³⁺, Cd²⁺, Hg²⁺, Pd²⁺, Pt²⁺, V²⁺, Mg²⁺, Ca²⁺, Ba²⁺ und Mischungen daraus,
   - X: mindestens ein Anion, ausgewählt aus der Gruppe, enthaltend Halogenid, Hydroxid, Sulfat, Carbonat, Cyanid, Thiocyanat, Isocyanat, Carboxylat, insbesondere Formiat, Acetat, Propionat, Oxalat, Nitrat bedeuten und m und n ganze Zahlen sind, die den Wertigkeiten von M¹ und X genügen,
   zu einer wäßrigen Lösung einer Cyanometallat-Säure der allgemeinen Formel HₐM²(CN)_{b}(A)_{c}, wobei M² mindestens ein Metallion, ausgewählt aus der Gruppe, enthaltend Fe²⁺, Fe³⁺, Co³⁺, Cr³⁺, Mn²⁺, Mn³⁺, Rh³⁺, Ru²⁺, Ru³⁺, V⁴⁺, V⁵⁺, Co²⁺, Ir³⁺ und Cr²⁺ bedeutet und M² gleich oder verschieden von M¹ ist,
   - H: Wasserstoff bedeutet,
   - A: mindestens ein Anion, ausgewählt aus der Gruppe, enthaltend Halogenid, Hydroxid, Sulfat, Carbonat, Cyanat, Thiocyanat, Isocyanat, Carboxylat oder Nitrat, insbesondere Cyanid bedeutet, wobei A gleich oder verschieden X sein kann, und a und b ganze Zahlen größer null und c eine ganze Zahl größer oder gleich null sind, die so ausgewählt sind, daß die Elektroneutralität der Cyanidverbindung gewährleistet ist,
b) gegebenenfalls Abtrennen der Multimetallcyanidverbindung aus der Suspension.

Für die Herstellung der Multimetallcyanidverbindung der Formel (I) wird als Cyanometallat-Verbindung die Säure verwendet, da es hierbei nicht zu einem Zwangsanfall eines Salzes als Nebenprodukt kommt. Ferner führt die Verwendung von Cyanometallatsäuren im erfindungsgemäßen Verfahren zu aktiveren Katalysatoren als die Verwendung von Cyanometallatsalzen.

Die für das erfindungsgemäße Verfahren einsetzbaren Cyanometallat-Wasserstoffsäuren sind in wäßriger Lösung stabil und gut handhabbar. Ihre Herstellung kann beispielsweise, wie in W. Klemm, W. Brandt, R. Hoppe, Z. Anorg. Allg. Chem. 308, 179 (1961) beschrieben, ausgehend vom Alkalicyanometallat über das Silbercyanometallat zur Cyanometallat-Wasserstoffsäure erfolgen. Eine weitere Möglichkeit besteht darin, ein Alkali- oder Erdalkalicyanometallat mittels eines sauren Ionenaustauschers in eine Cyanometallat-Wasserstoffsäure umzuwandeln, wie beispielsweise in F. Hein, H. Lilie, Z. Anorg. Allg. Chem. 270, 45 (1952), oder A. Ludi, H.U. Güdel, V. Dvorak, Helv. Chim. Acta 50, 2035 (1967) beschrieben. Weitere Möglichkeiten zur Synthese der Cyanometallat-Wasserstoffsäuren finden sich beispielsweise in "Handbuch der Präparativen Anorganischen Chemie", G. Bauer (Herausgeber), Ferdinand Enke Verlag, Stuttgart, 1981. Für eine technische Herstellung dieser Verbindungen, wie sie für das erfindungsgemäße Verfahren erforderlich ist, ist die Synthese über Ionenaustauscher der vorteilhafteste Weg. Die Cyanometallat-Wasserstoffsäure-Lösungen können nach der Synthese sofort weiterverarbeitet werden, es ist jedoch auch möglich, sie über einen längeren Zeitraum zu lagern. Eine solche Lagerung sollte unter Lichtausschluß erfolgen, um eine Zersetzung der Säure auszuschließen.

Der Anteil der Säure in der Lösung sollte größer 80 Gew.-%, bezogen auf die Gesamtmasse an Cyanometallat-Komplexen, vorzugsweise größer 90 Gew.-%, insbesondere größer 95 Gew.-%, sein.

Zur Herstellung der Multimetallcyanidverbindung der allgemeinen Formel (I) wird eine wäßrige Lösung einer Cyanometallat-Wasserstoffsäure mit der wäßrigen Lösung eines Metallsalzes der allgemeinen Formel M¹ₘ(X)ₙ, wobei die Symbole die oben erläuterte Bedeutung haben, vereinigt. Bevorzugt eingesetzt werden Metallcarboxylate, insbesondere Metallformiate, -acetate oder -propionate. Hierbei wird mit einem stöchiometrischen Überschuß des Metallsalzes gearbeitet. Vorzugsweise wird mit einem molaren Verhältnis des Metallions zur Cyanometallat-Komponente von 1,1 bis 7,0, bevorzugt 1,2 bis 5,0 und besonders bevorzugt von 1,3 bis 3,0 gearbeitet. Es ist vorteilhaft, die Metallsalzlösung vorzulegen und die Cyanometallat-Lösung zuzusetzen, es kann jedoch auch umgekehrt verfahren werden. Während und nach der Vereinigung der Eduktlösungen ist eine gute Durchmischung, beispielsweise durch Rühren, erforderlich.

Die Temperatur bei der Umsetzung beträgt vorzugsweise 20 bis 95°C, besonders bevorzugt 30 bis 80°C und insbesondere 40 bis 60°C. Die aufgewendete Rührenergie liegt vorzugsweise zwischen 0,05 und 4 W/l, insbesondere zwischen 0,3 und 2 W/l. Die Zugabezeit der Metallsalzlösung zur vorgelegten Cyanometalllatlösung oder umgekehrt beträgt vorzugsweise 5 min bis 5 h, insbesondere 15 min bis 2 h.

Der Gehalt der Cyanometallat-Verbindung in der Lösung beträgt 0,1 bis 30 Gew.-%, bevorzugt 0,1 bis 20 Gew.-%, insbesondere 0,2 bis 10 Gew.-%, der Gehalt der Metallsalzkomponente in der Lösung beträgt 0,1 bis 50 Gew.-%, bevorzugt 0,2 bis 40 Gew.-%, insbesondere 0,5 bis 30 Gew.-%.

Die erfindungsgemäß eingesetzten Multimetallcyanidverbindungen weisen vorzugsweise eine kristalline Struktur auf und können vorzugsweise Röntgenbeugungsmuster zeigen, wobei diese Röntgenbeugungsmuster, wie sie in DE 197 42 978, Fig. 1 bis 4, dagestellt sind, nicht limitierend für die Erfindung sind.

Unter dem Begriff "kristalline Struktur" wird verstanden, daß im Festkörper nicht nur eine Nahordnung, wie beispielsweise eine Anordnung von z.B. 6 C-Atomen um ein Co-Atom herum, sondern auch eine Fernordnung existiert, d.h. man kann eine immer wiederkehrende Einheit, auch als Einheitszelle bezeichnet, definieren, aus der sich der gesamte Festkörper aufbauen läßt. Ist ein Festkörper kristallin, so äußert sich das unter anderem im Röntgenbeugungsdiagramm. Im Röntgendiffraktogramm sieht man "scharfe" Reflexe, deren Intensität deutlich, d.h. mindestens dreimal, größer ist als der des Untergrundes.

Die Primärpartikel der erfindungsgemäßen Multimetallcyanidverbindungen können einen stäbchenförmigen, plättchenförmigen, würfel- oder auch kugelförmigen Habitus aufweisen.

Unter dem Begriff "Primärpartikel" wird der einzelne Kristallit verstanden, wie er z.B. auf den Rasterelektronenmikroskopieaufnahmen zu sehen ist. Diese Primärpartikel können sich zu Agglomeraten, den so genannten Sekundärpartikeln, zusammenlagern.

Die erfindungsgemäß eingesetzten Multimetallcyanidverbindungen können ein monoklines, troklines, trigonales, tetragonales, hexagonales oder orthorhombisches Kristallsystem aufweisen.

Die gemäß dem oben beschriebenen Verfahren durch Fällung erzeugten Multimetallcyanidverbindungen können dann durch Filtration oder Zentrifugieren von der Fällsuspension abgetrennt werden.

Eine Ausführungsform des Verfahrens zur Herstellung der Multimetallcyanidverbindung der Formel (I) sieht vor, daß die Multimetallcyanidverbindungen durch Filtration von der Fällsuspension abgetrennt werden, auf der Filtrationseinrichtung gegebenenfalls mit Wasser gewaschen und dann getrocknet werden werden. Die Trocknung erfolgt bei Temperaturen von 30°C bis 100°C, bevorzugt bei 40°C bis 80°C und Drücken von 0,0001 bar bis 1 bar, bevorzugt 0,001 bar bis 0,5 bar. Die Trocknung kann auch durch Anwendung von Mikrowellen, wie z.B. in einem Mikrowellen beheizten Ofen, erfolgen.

Bei einer weiteren Ausführungsform der Herstellung der erfindungsgemäß verwendeten Multimetallcyanidverbindungen wird der Filterkuchen nach dem Abtrennen von der Fällsuspension von der Filtriereinrichtung genommen, in Wasser suspendiert und dann erneut durch Filtration von der Flüssigkeit getrennt.

Die so erhaltenen pulverförmigen Multimetallcyanidverbindungen werden vorzugsweise durch effizientes Suspendieren im H-funktionellen Starter so fein wie möglich verteilt, um eine möglichst hohe Aktivität des Multimetallcyanid-Katalysators zu erreichen. Solche Methoden zur effizienten Herstellung einer möglichst fein verteilten Suspension sind unter anderem Rühren unter hohen Scherkräften, wie in Homogenisatoren oder Ultraturrax-Geräten, sowie die Verwendung von Dispergiermaschinen, insbesondere Topf- und Rührwerkskugelmühlen, wie Perlmühlen allgemein und solchen mit kleinen Mahlperlen (mit z.B. 0,3 mm Durchmesser), wie die Doppelzylinderperlmühlen (DCP-Super Flow®) von den Draiswerken GmbH, Mannheim, oder die Zentrifugalwirbelbettmühlen (ZWM) von Netzsch Gerätebau GmbH, Selb. Gegebenenfalls können zur Vordispergierung Dissolver eingesetzt werden. Ferner können in geringen Mengen dem Fachmann bekannte Dispergiermittel, wie z.B. Lecithin, Zn-Oleat, Zn-Stearat eingesetzt werden. Ferner sind alle Methoden geeignet, die es erlauben, Pulver möglichst fein in Flüssigkeiten zu Dispergieren.

Eine weitere Ausführungsform des Verfahrens zur Herstellung der erfindungsgemäß verwendeten Multimetallcyanidverbindungen besteht darin, nach der Fällung und Abtrennung der Multimetallcyanidverbindung von der Fällsuspension sowie nach dem Waschen der Multimetallcyanidverbindung, entweder auf der Filtriereinrichtung oder extern mit anschließend erneuter Filtration, auf die Trocknung zu verzichten und statt dessen aus der feuchten Multimetallcyanidbverbindung eine Suspension herzustellen. Die Multimetallcyanidverbindung kann dazu in organischen Flüssigkeiten oder Wasser, bevorzugt in Wasser, suspendiert werden.

Suspendiert man die ungetrocknete Multimetallcyanidverbindung in organischen Lösungsmitteln, wie Kohlenwasserstoffen, so sind Suspensionen mit Feststoffgehalten kleiner 20 Gew.-% bevorzugt. Besonders bevorzugt sind Feststoffgehalte kleiner 10 Gew.-% und insbesondere bevorzugt kleiner 5 Gew.-%.

Verwendet man als organische Lösungsmittel Polyether, so können diese Molmassen von 150 bis 6000 Dalton und Funktionalitäten von 1 bis 8 aufweisen. Bevorzugt werden Polyether mit Molmassen von 150 bis 2000 Dalton und Funktionalitäten von 1 bis 3, insbesondere Molmassen von 150 bis 800 Dalton. Bei der Verwendung von Polyethern sind Suspensionen mit Feststoffgehalten kleiner 20 Gew.-% bevorzugt. Besonders bevorzugt sind Feststoffgehalte kleiner 10 Gew.-% und insbesondere bevorzugt kleiner 5 Gew.-%.

Bevorzugt verwendet werden als organische Flüssigkeiten Polyole, die selbst als H-funktionelle Starter bei der Herstellung von Polyetherpolyolen fungieren, oder solche organische Flüssigkeiten, die einen Dampfdruck größer 0,01bar bei 110°C besitzen. Suspendiert man die ungetrocknete Multimetallcyanidverbindung in Wasser, so sind Suspensionen mit Feststoffgehalten von kleiner 20 Gew.-% und Pasten mit Feststoffgehalten kleiner 60 Gew.-% bevorzugt. Der Wassergehalt in den Pasten und Suspensionen liegt dann über 20 Gew.-%.

Das Dispergieren der getrockneten oder ungetrockneten Multimetallcyanidverbindung kann bei Temperaturen von 10°C bis 150°C, bevorzugt 50°C bis 120°C, erfolgen,

Bei einer speziellen Ausführungsform wird während der Dispergierung von mindestens einer ungetrockneten Multimetallcyanidverbindung in Polyetheralkohol oder einer ähnlich hochsiedenden Flüssigkeit Vakuum und Temperatur angelegt. Unter Vakuum werden sowohl Drücke kleiner 0,05 mbar als auch die Kombination von Drücken kleiner 0,1 bar zusammen mit Inertgasstripping verstanden. Inertgase können Stickstoff, Argon oder Helium sein.

Die Temperatur liegt dabei im Bereich von 10°C bis 150°C, bevorzugt 30°C bis 120°C.

Die erfindungsgemäß verwendeten Multimetallcyanid-Katalysatoren sind kristallin und weisen hohe katalytische Aktivitäten auf. Sie eignen sich hervorragend zur Synthese von Polyetherolen mit Funktionalitäten von 1 bis 8, bevorzugt 1 bis 6 und Molmassen von 500 bis 50000, bevorzugt 800 bis 15000, durch Anlagerung von Alkylenoxiden an H-funktionelle Startsubstanzen. Die bei diesem Verfahren angewendeten Katalysatorkonzentrationen sind kleiner 1 Gew.-%, bevorzugt kleiner 0,5 Gew.-%, besonders bevorzugt kleiner 1000 ppm, insbesondere bevorzugt kleiner 500 ppm, speziell bevorzugt kleiner 100 ppm bezogen auf die Gesamtmasse des Polyetherols. Die Herstellung der Polyetherole kann sowohl kontinuierlich oder diskontinuierlich erfolgen. Die Synthese kann in Suspensions-, Festbett-, Fließbett oder Schwebebettfahrweise erfolgen. Bei Verwendung von Fest-, Fließ- oder Schwebebett werden die erfindungsgemäßen Multimetallcyanidverbindungen auf feste organische oder anorganische Träger auf-, in diese eingebracht oder zu Vollkontakten verformt. Die verwendeten Temperaturen bei der Polyetherolsynthese liegen zwischen 50°C und 200°C, wobei Temperaturen zwischen 90°C und 150°C bevorzugt werden.

Zur Herstellung der Polyetheralkoholen unter Verwendung der Katalysatoren der allgemeinen Formel (I) können Verbindungen mit mindestens einer Alyklenoxidgruppe, wie zum Beispiel Ethylenoxid, 1,2-Epoxypropan, 1,2-Methyl-2-epoxipropan, 1,2-Epoxybutan, 2,3-Epoxybutan, 1,2-Methyl-3-epoxibutan, 1,2-Epoxypentan, 1,2-Methyl-3-epoxipentan, 1,2-Epoxyhexan, 1,2-Epoxyheptan, 1,2-Epoxyoctan, 1,2-Epoxynonan, 1,2-Epoxydecan, 1,2-Epoxyundecan, 1,2-Epoxydodecan, Styroloxid, 1,2-Epoxycyclopentan,1,2-Epoxycyclohexan, (2,3-Epoxypropyl)benzol, Vinyloxiran, 3-Phenoxy-1,2-epoxypropan, 2,3-Epoxymethylether, 2,3-Epoxylethylether, 2,3-Epoxylisopropylether, 2,3-Epoxyl-1-propanol, (3,4-Epoxybutyl)stearat, 4,5-Epoxypentylacetat, 2,3-Epoxylpropanmethacrylat, 2,3-Epoxylpropanacrylat, Gylcidylbutyrat, Metylglycidat, Ethyl-2,3-epoxybutanoat, 4-(Trimethylsilyl)butan-1,2-epoxid, 4-(Triethylsilyl)butan-1,2epoxid, 3-(Perfluoromethyl)propenoxid, 3-(Perfluoroethyl)propenoxid, 3-(Perfluorobutyl)propenoxid, 4-(2,3-Epoxypropy)morpholin, 1-(Oxiran-2-ylmethyl)pyrrolidin-2-on, sowie deren beliebige Mischungen untereinander, eingesetzt werden. Bevorzugt sind Ethylenoxid, 1,2-Epoxypropan, 1,2-Epoxybutan, Styroloxid, Vinyloxiran und deren beliebige Mischungen untereinander, insbesondere Ethylenoxid, 1,2-Epoxypropan, und Mischungen aus Ethylenoxid, 1,2-Epoxypropan.

Das Herstellungsverfahren für die Multimetallcyanidverbindungen der Formel (I) besitzt Vorteile im Vergleich zu den in der Literatur beschriebenen Herstellungsverfahren. Der Verzicht auf einen organischen Liganden führt zu einer deutlichen Materialeinsparung und damit zu niedrigeren Kosten.

Der Verzicht auf einen organischen Liganden, der in der Regel einen gewissen Dampfdruck besitzt und dessen Handhabung erhöhte Anforderungen an die zu verwendenden Apparate stellt, beispielsweise den Einsatz von Druckkesseln, geschlossenen Apparaturen, gekammerten Filterpressen, Vollschutz der Mitarbeiter beim Umgang mit dem Filterkuchen, Absaugung der Gasatmosphäre, erlaubt die Verwendung deutlich einfacherer und damit billigerer Apparate. Dies wirkt sich ebenfalls auf die Herstellkosten aus.

Weiterhin führt ein Verzicht auf einen organischen Liganden zu einer einfacheren Aufarbeitung der Abwässer aus der Katalysatorherstellung, da auf die Belastung mit organischen Komponenten geringer ist. Auch dies führt zu niedrigeren Herstellkosten.

Durch den einfacheren Umgang mit den für den Herstellungsprozeß der erfindungsgemäß verwendeten Multimetallcyanidverbindungen notwendigen Edukten ist ferner eine Verkürzung der Herstellungszeit verbunden, was ebenfalls kostensparend wirkt.

Die erfindungsgemäß verwendeten Katalysatoren weisen überraschenderweise höhere katalytische Aktivitäten auf, als solche, die unter Verwendung von organischem Liganden hergestellt wurden, wobei sich dieser Effekt bei den mittels Cyanometallatsäuren hergestellten Multimetallcyanidverbindungen am stärksten zeigt.

Die Erfindung soll an nachfolgenden Beispielen näher erläutert werden.

### Herstellung der Hexacyanocobaltatsäure

7 1 stark saurer Ionenaustauscher, der sich in der Natriumform befand (Amberlite® 252 Na, Fa. Rohm & Haas), wurden in eine Austauschersäule (Länge 1m, Volumen 7,7 1) gefüllt. Der Ionenaustauscher wurde anschließend in die H-Form überführt, indem 10 %ige Salzsäure mit einer Geschwindigkeit von 2 Bettvolumen pro Stunde 9 h lang über die Austauschersäule gefahren wurde, bis der Na-Gehalt im Austrag kleiner 1 ppm betrug. Anschließend wurde der Ionenaustauscher mit Wasser neutral gewaschen.
Der regenerierte Ionenaustauscher wurde nun benutzt, um eine im wesentlichen alkalifreie Hexacyanocobaltatsäure herzustellen. Dazu wurde eine 0,24 molare Lösung von Kaliumhexacyanocobaltat in Wasser mit einer Geschwindigkeit von einem Bettvolumen pro Stunde über den Austauscher gefahren. Nach 2,5 Bettvolumen wurde von der Kaliumhexacyanocobaltat-Lösung auf Wasser gewechselt. Die erhaltenen 2,5 Bettvolumen hatten im Mittel einen Gehalt von Hexacyanocobaltatsäure von 4,5 Gew.-% und Alkaligehalte kleiner 1 ppm.
Die für die weiteren Beispiele verwendeten Hexacyanocobaltatsäure-Lösungen wurden entsprechend mit Wasser verdünnt.

### Vergleichsbeispiel 1

200 ml einer wäßrigen Hexacyanocobaltsäure-Lösung (4,4 Gew.-% H₃[Co(CN)₆], Kalium-Gehalt <1 ppm) wurden auf 40°C temperiert und anschließend unter Rühren (Blattrührer, U=500 min⁻¹) mit einer Lösung von 17,88 g Zn(II)-Acetat-Dihydrat in 60 g Wasser versetzt. Anschließend wurden zur Suspension 35 g tert.-Butanol gegeben. Die Suspension wurde bei 40°C weitere 30 min gerührt. Danach wurde der Feststoff abgesaugt und auf dem Filter mit 200 ml tert.-Butanol gewaschen. Der so behandelte Festkörper wurde bei 50°C 16 h im Vakuum getrocknet.

Der feuchte Filterkuchen hatte einen Co-Gehalt von 3,5 Gew.-% und einen Zn-Gehalt von 8,3 Gew.-%, bezogen auf den Filterkuchen. Dies ergibt gemäß der Co- und Zn-Bilanz ein Verhältnis von Zn₃[Co(CN)₆]₂ zu Zinkacetat von 1:1,14.

### Beispiel 1

474,9 g einer wäßrigen Zinkacetat-Lösung (13,38 g Zinkacetat-Dihydrat in 150g Wasser gelöst) wurden auf 50°C temperiert. Unter Rühren (Schraubenrührer, Rührenergieeintrag: 1W/1) wurden anschließend innerhalb von 20 min 553 g einer wäßrigen Hexacyanocobaltatsäure-Lösung (Cobaltgehalt: 9 g/l), bezogen auf die Hexacyanocobaltatsäure-Lösung) zu dosiert. Nach vollständiger Dosierung der Hexacyanocobaltatsäure wurde 5 min bei 50°C weitergerührt. Anschließend wurde die Temperatur innerhalb einer Stunde auf 40°C gesenkt.
Der gefällte Feststoff wurde über eine Druckfilternutsche von der Flüssigkeit abgetrennt und mit Wasser gewaschen.
Der wasserfeuchte Filterkuchen wurde anschließend in soviel Wasser dispergiert, daß eine 5 gew.-%ige Multimetallcyanidsuspension entstand.

Der feuchte Filterkuchen hatte einen Co-Gehalt von 3,6 Gew.-% und einen Zn-Gehalt von 8,1 Gew.-%, bezogen auf den Filterkuchen. Dies ergibt gemäß der Co- und Zn-Bilanz ein Verhältnis von Zn₃[Co(CN)₆]₂ zu Zinkacetat in der Multimetallcyanidverbindung von 1:1,03.

### Vergleichsbeispiel 2

Die Synthese wurde in einem gereinigten und getrockneten 1-1-Rührautoklaven durchgeführt. Es wurden 200 g Polypropylenglykol in den Rührkessel gegeben und mit 250 ppm Katalysator aus Vergleichsbeispiel 1 versetzt. Der Kesselinhalt wurde mit Stickstoff inertisiert und 1 h bei 108°C im Vakuum behandelt.
Bei 115°C wurden anschließend 1 mol Propylenoxid zudosiert und das Anspringen der Reaktion abgewartet. Im Anschluß wurde das restliche Propylenoxid bis zu einer Gesamtmenge von 800 g zudosiert Die Dosierzeit betrug 1,1 Stunden, das Druckmaximum lag bei 3,9 bar absolut. Die Aufarbeitung des Produkts erfolgte durch Vakuumdestillation und Filtration.
Hydroxylzahl: 52 mg KOH/g;
Viskosität bei 25°C: 516 mPas;
Zn/Co: 6/2 ppm.

### Beispiel 2

Die Synthese wurde in einem gereinigten und getrockneten 1-1-Rührautoklaven durchgeführt. Es wurden 150 g Polypropylenglykol in den Rührkessel gegeben und mit 80 ppm Katalysator aus Beispiel 1 (bez. auf Feststoffgehalt/Endprodukt) versetzt. Der Kesselinhalt wurde mit Stickstoff inertisiert und 1,25 h bei 127°C im Vakuum behandelt.
Bei 130°C wurden anschließend 1 mol Propylenoxid zudosiert und das Anspringen der Reaktion abgewartet. Im Anschluß wurde das restliche Propylenoxid bis zu einer Gesamtmenge von 620 g zudosiert. Die Dosierzeit betrug 1,5 Stunden, das Druckmaximum lag bei 3,8 bar absolut. Die Aufarbeitung des Produkts erfolgte durch Vakuumdestillation und Filtration.
Hydroxylzahl 55 mg KOH/g;
Viskosität bei 25°C: 336 mPas;
Zn/Co-Gehalt: 6/2 ppm.

## Patentansprüche

1. Verfahren zur Herstellung von Polyetheralkoholen mit einer Molmasse von 500 bis 50000 Dalton und einer Funktionalität von 1 bis 8 durch ringöffnende Polymerisation von Alkylenoxiden, **dadurch gekennzeichnet, daß** als Katalysator mindestens eine Multimetallcyanidverbindung mit kristallinem Aufbau der allgemeinen Formel (I)
M¹ ₐ[M²(CN)_{b}A_{c}]_{d} * e M¹ _{f}X_{g} * h H₂O (I),
wobei
M¹ mindestens ein Metallion, ausgewählt aus der Gruppe, enthaltend Zn²⁺, Fe²⁺, Co³⁺, Ni²⁺, Mn²⁺, Co²⁺, Sn²⁺, Pb²⁺, Fe³⁺, Mo⁴⁺, Mo⁶⁺, Al³⁺, V⁵⁺, Sr²⁺, W⁴⁺, W⁶⁺, Cu²⁺, Cr²⁺, Cr³⁺, Cd²⁺, Hg²⁺, Pd²⁺, Pt²⁺, V²⁺, Mg²⁺, Ca²⁺, Ba²⁺ und Mischungen daraus,
M² mindestens ein Metallion, ausgewählt aus der Gruppe, enthaltend Fe²⁺, Fe³⁺, Co³⁺, Cr³⁺, Mn²⁺, Mn³⁺, Rh³⁺, Ru²⁺, Ru³⁺, V⁴⁺, V⁵⁺, Co²⁺, Ir³⁺ und Cr²⁺ bedeutet und M² verschieden von M¹ ist,
X mindestens ein Anion, ausgewählt aus der Gruppe, enthaltend Halogenid; Hydroxid, Sulfat, Carbonat, Cyanid, Thiocyanat, Isocyanat, Carboxylat, insbesondere Formiat, Acetat, Propionat, Oxalat, Nitrat,
A mindestens ein Anion, ausgewählt aus der Gruppe, enthaltend Halogenid, Hydroxid, Sulfat, Carbonat, Cyanid, Thiocyanat, Isocyanat, Carboxylat oder Nitrat, insbesondere Cyanid bedeutet, wobei A gleich oder verschieden X sein kann, bedeuten und
a, b, c und d ganze oder gebrochene Zahlen sind, die so ausgewählt sind, daß die Elektroneutralität der Cyanidverbindung gewährleistet ist, wobei a, b, d größer null und c größer oder gleich null ist,
e eine ganze oder gebrochene Zahl größer null ist,
f und g ganze oder gebrochene Zahlen sind, die so ausgewählt sind, daß die Elektroneutralität von M¹_{f}X_{g} gewährleistet ist, sowie
h eine ganze oder gebrochene Zahl größer oder gleich null ist,
eingesetzt wird, die unter Verwendung einer Hexacyanocobaltatsäure hergestellt wurde.

2. Verfahren nach Anspruch 1, **dadurch gekennzeichnet, daß** die Multimetallcyanidverbindung ein monoklines, triklines, trigonales, tetragonales, hexagonales oder orthorhombisches Kristallsystem aufweist.

## Claims

1. A process for preparing polyether alcohols having a molar mass of from 500 to 50 000 dalton and a functionality of from 1 to 8 by ring-opening polymerization of alkylene oxides, wherein a multimetal cyanide compound having a crystalline structure and the formula (I)
M¹ ₐ[M²(CN)_{b}A_{c}]_{d} * e M¹ _{f}X_{g} * h H₂O (I),
where
M¹ is at least one metal ion selected from the group consisting of Zn²⁺, Fe²⁺, Co³⁺, Ni²⁺, Mn²⁺, Co²⁺, Sn²⁺, Pb²⁺, Fe³⁺, Mo⁴⁺, Mo⁶⁺, Al³⁺, V⁵⁺, Sr²⁺, W⁴⁺, W⁶⁺, Cu²⁺, Cr²⁺, Cr³⁺, Cd²⁺, Hg²⁺, Pd²⁺, Pt²⁺, V²⁺, Mg²⁺, Ca²⁺, Ba²⁺ and mixtures thereof,
M² is at least one metal ion selected from the group consisting of Fe²⁺, Fe³⁺, Co³⁺, Cr³⁺, Mn²⁺, Mn³⁺, Rh³⁺, Ru²⁺, Ru³⁺, V⁴⁺, V⁵⁺, Co²⁺, Ir³⁺ and Cr²⁺ and M² is different from M¹,
X is at least one anion selected from the group consisting of halide, hydroxide, sulfate, carbonate, cyanide, thiocyanate, isocyanate, carboxylate, in particular formate, acetate, propionate or oxalate, and nitrate,
A is at least one anion selected from the group consisting of halide, hydroxide, sulfate, carbonate, cyanide, thiocyanate, isocyanate, carboxylate and nitrate, in particular cyanide, where A can be identical to or different from X, and
a, b, c and d are integers or fractions which are selected so that the cyanide compound is electrically neutral, where a, b and d are greater than zero and c is greater than or equal to zero,
e is an integer or fraction greater than zero,
f and g are integers or fractions which are selected so that M¹_{f}X_{g} is electrically neutral, and
h is an integer or fraction greater than or equal to zero.
is used as catalyst and was prepared using a hexacyanocoballic acid.

2. A process as claimed in claim 1, wherein the multimetal cyanide compound has a monoclinic, triclinic, trigonal, tetragonal, hexagonal or orthorhombic crystal system.

## Revendications

1. Procédé de préparation de polyéther alcools ayant une masse molaire de 500 à 50.000 Daltons et une fonctionnalité de 1 à 8, par polymérisation avec ouverture de cycle d'oxydes d'alkylène, **caractérisé en ce que**, comme catalyseur, on met en oeuvre au moins un composé de cyanure multimétallique à structure cristalline de la formule générale (I) :
M¹ ₐ[M²(CN)_{b}A_{c}]_{d} * e M¹ _{f}X_{g} * h H₂O (I)
dans laquelle
M¹ représente au moins un ion métallique, choisi parmi le groupe comprenant Zn²⁺, Fe²⁺, Co³⁺, Ni²⁺, Mn²⁺, Co²⁺, Sn²⁺, Pb²⁺, Fe³⁺, Mo⁴⁺, Mo⁶⁺, Al³⁺, V⁵⁺, Sr²⁺, W⁴⁺, W⁶⁺, Cu²⁺, Cr²⁺, Cr³⁺, Cd²⁺, Hg²⁺, Pd²⁺, Pt²⁺, V²⁺, Mg²⁺, Ca²⁺, Ba²⁺ et leurs mélanges,
M² représente au moins un ion métallique, choisi parmi le groupe comprenant Fe²⁺, Fe³⁺, Co³⁺, Cr³⁺, Mn²⁺, Mn³⁺, Rh³⁺, Ru²⁺, Ru³⁺, V⁴⁺, V⁵⁺, Co²⁺, Ir³⁺ et Cr²⁺, M² étant différent de M¹,
X représente au moins un anion, choisi parmi le groupe comprenant de l'halogénure, de l'hydroxyde, du sulfate, du carbonate, du cyanure, du thiocyanate, de l'isocyanate, du carboxylate, en particulier du formiate, de l'acétate, du propionate, de l'oxalate, du nitrate,
A représente au moins un anion, choisi parmi le groupe comprenant de l'halogénure, de l'hydroxyde, du sulfate, du carbonate, du cyanure, du thiocyanate, de l'isocyanate, du carboxylate ou du nitrate, en particulier du cyanure, A pouvant être identique ou différent de X, et
a, b, c et d sont des nombres entiers ou fractionnaires qui sont choisis de façon que la neutralité électronique du composé de cyanure soit garantie, a, b, d étant supérieurs à zéro et c étant supérieur ou égal à zéro,
e est un nombre entier ou fractionnaire supérieur à zéro,
f et g sont des nombres entiers ou fractionnaires qui sont choisis de façon que la neutralité électronique de M¹_{f}X_{g} soit garantie, et
h est un nombre entier ou fractionnaire supérieur ou égal à zéro,
composé qui a été préparé par utilisation d'un acide hexacyanocobaltique.

2. Procédé suivant la revendication 1, **caractérisé en ce que** le composé de cyanure multimétallique présente un système cristallin monoclinique, triclinique, trigonal, tétragonal, hexagonal ou orthorhombique.
